# EUROPÄISCHE PATENTSCHRIFT

(11) **EP 3 723 334 B1**
(45) Veröffentlichungstag und Bekanntmachung des Hinweises auf die Patenterteilung: **01.03.2023**
(21) Anmeldenummer: 20167867.9
(22) Anmeldetag: 03.04.2020
(51) Int. Cl.: H04L 25/02, G08G 3/00

(54) **VERFAHREN UND KOMMUNIKATIONSSYSTEM ZUR FUNKBASIERTEN ÜBERTRAGUNG VON KOMMUNIKATIONSDATEN**
METHOD AND COMMUNICATION SYSTEM FOR RADIO-BASED COMMUNICATION DATA TRANSMISSION
PROCÉDÉ ET SYSTÈME DE COMMUNICATION POUR UNE TRANSMISSION RADIO DE DONNÉES DE COMMUNICATION

(30) Priorität: 11.04.2019 DE 102019109632
(43) Veröffentlichungstag der Anmeldung: 14.10.2020
(73) Patentinhaber: Deutsches Zentrum für Luft- und Raumfahrt e.V., 51147 Köln (DE)
(72) Erfinder: Plass, Simon, 82229 Seefeld (DE); Dammann, Armin, 86899 Landsberg a. Lech (DE)
(74) Vertreter: Gramm, Lins & Partner Patent- und Rechtsanwälte PartGmbB

(56) Entgegenhaltungen:
- HASSANIN AHMED ET AL: "An advanced AIS receiver using a priori information", OCEANS 2015 - GENOVA, IEEE, 18. Mai 2015 (2015-05-18), Seiten 1-7, XP033205537, DOI: 10.1109/OCEANS-GENOVA.2015.7271475 [gefunden am 2015-09-17]

## Beschreibung

Die Erfindung betrifft ein Verfahren zur funkbasierten Übertragung von Kommunikationsdaten mittels eines Funkkommunikationssystems, das nachfolgend als erstes Funkkommunikationssystem bezeichnet wird. Die Erfindung betrifft ebenfalls ein Kommunikationssystem zur funkbasierten Übertragung von Kommunikationsdaten hierzu.

Die Überwachung des weltweit zunehmenden Schiffsverkehrs basiert heute überwiegend auf Radarüberwachung, Sprechfunk sowie der Nutzung von AIS (Automatic Identification System). Seit dem Jahr 2000 ist das AIS von der internationalen Schifffahrtsorganisation (IMO) als verbindlicher Standard festgelegt worden, um die Sicherheit des internationalen Schiffsverkehrs zu erhöhen. Dieses lokal begrenzte Funksystem dient zum Austausch von Navigation- und anderen Schiffsdaten, die es den Schiffen ermöglichen sollen, einen umfassenden Überblick über den benachbarten Schiffsverkehr zu erhalten. Primäres Ziel ist es dabei, Kollisionen mit anderen Schiffen zu vermeiden.

Mithilfe eines auf den Schiffen angeordneten AIS-Schiffstransceiver werden abwechselnd auf 2 Kanälen im UKW-Seefunkbereich, nämlich zum einen auf 161,975 MHz und zum anderen auf 162,025 MHz, AIS-Funksignale im Broadcastverfahren ausgesendet, welche die entsprechenden Schiffsdaten wie beispielsweise Navigationsdaten enthalten. Gemäß dem AIS-Kommunikationsprotokoll werden die AIS-Funksignale in festen Zeitrahmen ausgesendet, deren Belegung selbstständig durch die betreffenden Teilnehmer abgestimmt wird (sogenanntes SOTDMA: Self-Organising Time Division Multiple Access). Dabei stehen pro Minute 2250 Zeitschlitze zur Übertragung von Daten den einzelnen Teilnehmern zur Verfügung.

Aufgrund des verwendeten UKW-Frequenzbandes entspricht die Funkreichweite von AIS von Schiff zu Schiff ca. 40 bis 60 km, was ein wenig mehr als die normale Sichtweite auf hoher See entspricht. Küstenstationen können durch ihre höhere Position einen Umkreis von bis zu 100 km abdecken. Aufgrund der beschränkten Reichweite sowie des verwendeten SOTDMA-Übertragungsprotokolls bilden Schiffe, die sich gegenseitig sehen und empfangen können, eine AIS-Funkzelle, innerhalb derer die Teilnehmer kollisionsfrei senden und empfangen können.

Damit stellt das AIS ein lokales Funkkommunikationssystem dar, welches für ein auf hoher See befindliches Schiff ausreichend Daten seiner Umgebung zur Verfügung stellt. Für die weltweite Erhebung des zunehmenden Schiffsverkehrs ist es aufgrund der begrenzten Reichweite ohne weitere Maßnahmen jedoch nicht geeignet. So wird beispielsweise in der DE 10 2011 113 152 A1 ein AIS-Überwachungssystem vorgeschlagen, mit dem die von den Schiffen ausgesendeten AIS-Funksignale mithilfe von Verkehrsflugzeugen empfangen werden können und dann an eine Bodenstation weitergeleitet werden. Auch der Empfang von AIS-Funksignalen mithilfe von Satelliten und entsprechenden Empfänger an den Satelliten ist bekannt.

Aus der DE 10 2012 110 540 A1 ist ein AIS-Schiffstransceiver zum Senden und Empfangen von AIS-Funksignalen bekannt, wobei in Abhängigkeit von der Position des Schiffes und/oder der Anzahl benachbarter Schiffe das Aussenden von AIS-Funksignalen eines bestimmten Signaltyps für eine satellitengestützte Überwachung aktiviert oder deaktiviert werden kann.

Aus der DE 10 2012 110 384 A1 ist ein AIS-Überwachungssystem zur Überwachung von Schiffen bekannt, bei dem die AIS-Funksignale mithilfe von Flugobjekten empfangen werden. Die Signalverarbeitung der empfangenen AIS-Funksignale erfolgt dabei unter Zuhilfenahme von Funksignalen, die von anderen Empfangseinheiten in einem Überlappungsbereich des Empfangsbereiches der Flugobjekte empfangen wurden. Hierdurch soll das Extrahieren bzw. das Dekodieren der in den Funksignalen enthaltenen Kommunikationsdaten insbesondere bei großen Empfangsbereiches, die oftmals unter Signalkollisionen leiden, verbessert werden.

Die aus dem Stand der Technik bekannten Verbesserungen betreffen dabei lediglich das AIS-Kommunikationsprotokoll an sich oder eine verbesserte Signalverarbeitung bei Signalkollisionen beim Empfang mehrere benachbarter AIS-Funkzellen. Der eigentliche Übertragungskanal des AIS-Funkkommunikationssystems wird dabei jedoch nicht betrachtet. AIS basiert auf dem Signalmodulationsverfahren GMSK. Auf der Empfängerseite ist dabei keine zuverlässige Kanalschätzung eines Zeitschlitzes bzw. einer Zeitschlitzperiode (alle 2250 Zeitschlitze) möglich, wodurch jedoch die Dekodierfähigkeit leidet. Zwar kennt der AIS-Standard eine Trainingssequenz am Anfang eines jedes Zeitschlitzsignals. Allerdings verändert sich der Übertragungskanal derart schnell, dass dies für eine zuverlässige Kanalschätzung nicht ausreichend ist.

Aus HASSANIN, A.; LAZARO, F.; PLASS, S.: An Advanced AIS Receiver using a priori Information. In: OCEANS 2015 - Genova, 18 - 21 May 2015, pp. 1 - 7. DOI: 10.1109/OCEANS-Genova.2015.7271475, ist ein Verfahren zur Verbesserung des Empfangs von AIS-Funksignalen an Satelliten beschrieben. Dabei werden zur verbesserten Analyse der Funksignale bei Signalkollisionen bestimmte Informationen als bekannt vorgegeben, sodass Teile der empfangenen Funksignale bekannt sind. Darüber hinaus kann je nach Situation die Anzahl der Trainingssymbole innerhalb der AIS-Funksignale verdoppelt werden.

Es ist daher Aufgabe der vorliegenden Erfindung ein verbessertes Verfahren sowie ein verbessertes Kommunikationssystem zur funkbasierten Übertragung von Kommunikationsdaten anzugeben, mit dem die Dekodierfähigkeit von Funksignalen verbessert werden kann, auch wenn das Funkkommunikationssystem keine oder keine ausreichende Kanalschätzung in seinem Kommunikationsprotokoll vorsieht.

Die Aufgabe wird mit dem Verfahren gemäß Anspruch 1 sowie dem Kommunikationssystem gemäß Anspruch 11 erfindungsgemäß gelöst. Vorteilhafte Ausgestaltungen der Erfindung finden sich in den entsprechenden Unteransprüchen.

Gemäß Patentanspruch 1 wird ein Verfahren zur funkbasierten Übertragung von Kommunikationsdaten mittels eines ersten Funkkommunikationssystems vorgeschlagen, wobei das erste Funkkommunikationssystem das relevante Zielsystem ist, welches die für den jeweiligen Anwendungsfall relevanten Kommunikationsdaten von einem Sender zu einem Empfänger übertragen soll. Ein solches erstes Funkkommunikationssystem bzw. Zielsystem kann dabei beispielsweise ein AIS-Funkkommunikationssystem sein, wobei die Kommunikationsdaten dann entsprechende Schiffsdaten gemäß dem AIS-Standard sind.

Gemäß dem Verfahren werden gattungsgemäß zunächst die Kommunikationsdaten mittels des ersten Funkkommunikationssystems von mindestens einer ersten Sendeeinheit zu mindestens einer ersten Empfangseinheit drahtlos bzw. funkbasierten übertragen. Das erste Funkkommunikationssystem weist hierfür ein oder mehrere erste Übertragungsfrequenzen auf bzw. sind diesem Funkkommunikationssystem zugeordnet, um ein erstes Funksignal unter Verwendung des ersten Funkkommunikationssystems auf mindestens einer dieser ersten Übertragungsfrequenzen von der ersten Sendeeinheit aussenden und von der ersten Empfangseinheit empfangen zu können. Ein solches erstes Funksignal des ersten Funkkommunikationssystems enthält dabei die relevanten Kommunikationsdaten, die mittels des ersten Funkkommunikationssystems von dem Sender zu dem Empfänger übertragen bzw. übermittelt werden sollen.

Erfindungsgemäß ist nun vorgesehen, dass mindestens ein Pilotsymbol zur Kanalschätzung mittels eines von dem ersten Funkkommunikationssystem verschiedenen zweiten Funkkommunikationssystems von einer zweiten Sendeeinheit zu mindestens einer zweiten Empfangseinheit übertragen wird, wobei dem zweiten Funkkommunikationssystem ein oder mehrere zweite Übertragungsfrequenzen zugeordnet sind, die von den ersten Übertragungsfrequenzen des ersten Kommunikationssystems verschieden sind. Unter Verwendung des zweiten Funkkommunikationssystems wird nun ein das mindestens eine Pilotsymbol enthaltenes zweites Funksignal auf mindestens einer dieser zweiten Übertragungsfrequenzen von der zweiten Sendeeinheit ausgesendet und von der zweiten Empfangseinheit empfangen, um so das Pilotsymbol von dem Sender zu dem Empfänger mittels des zweiten Funkkommunikationssystems zu übertragen.

Erfindungsgemäß ist des Weiteren vorgesehen, dass das zweite Funksignal mit dem Pilotsymbol auf mindestens einer der zweiten Übertragungsfrequenzen ausgesendet wird, die sich innerhalb der Kohärenzbandbreite der mindestens ersten Übertragungsfrequenz befindet, mit der die Kommunikationsdaten mittels des ersten Funckommunikationssystems übertragen wurden. Die zweite Übertragungsfrequenz, auf der das zweite Funksignal mit dem Pilotsymbol zur Kanalschätzung ausgesendet wird, liegt somit innerhalb der Kohärenzbandbreite der ersten Übertragungsfrequenz für die Kommunikationsdaten.

Anschließend, nachdem sowohl das erste Funksignal durch die erste Empfangseinheit als auch das zweite Funksignal durch die zweite Empfangseinheit empfangen wurden, wird eine Kanalschätzung des Übertragungskanals des ersten Funkkommunikationssystems mittels einer Auswerteeinheit durchgeführt, wobei die Kanalschätzung durch die Auswerteeinheit in Abhängigkeit von dem empfangenen zweiten Funksignal enthaltend das mindestens eine Pilotsymbol durchgeführt wird.

Mithilfe der vorliegenden Erfindung wird es somit möglich, eine Kanalschätzung eines Übertragungskanals eines ersten Funkkommunikationssystems bzw. eines Zielsystems mithilfe von Pilotsymbolen, die extra zum Zwecke der Kanalschätzung übertragen werden sollen, durchzuführen, auch wenn das erste Funkkommunikationssystem und dem zugrunde liegenden Übertragungsprotokoll eine solche Kanalschätzung mittels Pilotsymbolen in nicht vorsieht oder diese nicht ausreichend ist. Damit kann der vorteilhafte Effekt einer Kanalschätzung mittels Pilotsymbolen erreicht werden, ohne den Übertragungsstandard des ersten Funkkommunikationssystems zu verändern, was einen erheblichen Aufwand insbesondere im Bereich des AIS-Standards darstellt. Vielmehr ist das erfindungsgemäße Verfahren standardkonform in Bezug auf das erste Funkkommunikationssystem, sodass die Kanalschätzung mittels des zweiten Funkkommunikationssystems bedarfsweise und je nach Verfügbarkeit des zweiten Funkkommunikationssystems auf der Empfängerseite durchgeführt wird. Eine Änderung des Standards des ersten Funkkommunikationssystems bedarf es hierfür nicht.

Voraussetzung hierfür ist, dass das zweite Funkkommunikationssystem entsprechende Übertragungsfrequenzen hat, die sich in der Kohärenzbandbreite des Zielsystems bzw. des ersten Funkkommunikationssystems befinden, sodass das zweite Funksignal mit den Pilotsymbolen auf einer solchen zweiten Übertragungsfrequenzen übertragen wird, die innerhalb der Kohärenzbandbreite des ersten Funksignals liegt. Der zu schätzenden Übertragungskanal des Zielsystems bzw. des ersten Funckommunikationssystems wird dabei über dessen Impulsantwort beschrieben, wobei seine maximale Verzögerung der Impulsantwort gibt. Es kann nun durch die Korrelation der Impulsantwort die Kohärenzbandbreite abgeleitet werden, in welcher die Kanalausbreitungseigenschaften korreliert sind. Somit können in diesen korrigierten Bandbreitenbereich Informationen über den Kanal abgeleitet werden und eine Kanalschätzung für das Zielsystem durch geeignete Extrapolation aus der Kanalschätzung des zweiten Funkkommunikationssystems durchgeführt werden.

Das Aussenden der zweiten Funksignale durch das zweite Funkkommunikationssystem erfolgt dabei vorzugsweise synchronisiert und in Abhängigkeit von dem Aussenden der ersten Funksignale durch das erste Funkkommunikationssystem, um die Korrelation der Kanalausbreitungseigenschaften der ersten und zweiten Übertragungsfrequenzen innerhalb der Kohärenzbandbreite nutzen zu können.

Die erste Sendeeinheit und die zweite Sendeeinheit können dabei ein und dasselbe physische Gerät darstellen und müssen nicht zwangsläufig getrennt vorliegen. Vielmehr können die erste und zweite Sendeinheit durch eine gemeinsame Sendeeinheit realisiert sein, welche die Eigenschaften der ersten Sendeeinheit und der zweiten Sendeeinheit vereint. Denkbar ist allerdings auch, dass die erste Sendeeinheit und die zweite Sendeinheit getrennte physische Geräte darstellen, wodurch auf der Senderseite die Funktionalität einer Kanalschätzung für das erste Funkkommunikationssystem einfach durch Hinzufügen einer zweiten Sendeeinheit realisiert werden kann.

Die erste Empfangseinheit und die zweite Empfangseinheit können dabei ebenfalls ein und dasselbe physische Gerät darstellen und müssen nicht zwangsläufig getrennt vorliegen. Vielmehr können die erste und zweite Empfangseinheit durch eine gemeinsame Empfangseinheit realisiert sein, welche die Eigenschaften der ersten Empfangseinheit und der zweiten Empfangseinheit vereint. Denkbar ist allerdings auch, dass die erste Empfangseinheit und die zweite Empfangseinheit getrennte physische Geräte darstellen. Zur Durchführung der Kanalschätzung wird dabei der Auswerteeinheit, die Bestandteil der ersten Empfangseinheit sein kann, die empfangenen zweiten Funksignale bereitgestellt, was über eine entsprechende Schnittstelle realisiert werden kann. Dadurch kann die erste Empfangseinheit unter Kenntnis der Kanalschätzung ihres entsprechenden Übertragungskanals die ersten Funksignale verbessert decodieren.

Unter einem Funkkommunikationssystem im Sinne der vorliegenden Erfindung wird ein Funksystem verstanden, dem zum Übertragen der Daten entsprechende Frequenzen zugeordnet sind und das diese Daten gemäß einem entsprechenden Standard in das Funksignal kodiert.

Gemäß einer Ausführungsform ist vorgesehen, dass die Kanalschätzung des Übertragungskanals des ersten Funkkommunikationssystems, mit dem die Kommunikationsdaten übertragen wurden, in Abhängigkeit von dem empfangenen ersten Funksignal enthaltend die Kommunikationsdaten und dem empfangenen zweiten Funksignal enthaltend das mindestens eine Pilotsymbol mittels der Auswerteeinheit durchgeführt wird. In dieser Ausführungsform wird der Kanalschätzung demzufolge nicht nur das zweite Funksignal mit dem mindestens einen Pilotsymbol zugrunde gelegt, sondern auch das empfangene erste Funksignal mit den Kommunikationsdaten.

Gemäß einer weiteren Ausführungsform ist vorgesehen, dass in den ersten Funksignalen die Kommunikationsdaten basierend auf einem bekannten ersten Übertragungsprotokoll des ersten Funkkommunikationssystems und in den zweiten Funksignalen das mindestens eine Pilotsymbol basierend auf einem bekannten zweiten Übertragungsprotokoll des zweiten Funkkommunikationssystems kodiert werden, wobei das erste Übertragungsprotokoll von dem zweiten Übertragungsprotokoll verschieden ist. Unter einem Übertragungsprotokoll im Sinne der vorliegenden Erfindung wird dabei insbesondere ein Standard verstanden, um die zu übertragenden Daten in den Funksignalen zu kodieren und betrifft insbesondere die erste oder zweite Schicht des OSI-Referenzmodells, sowie die dritte bis fünfte Schicht des OSI-Referenzmodells.

Gemäß einer weiteren Ausführungsform ist vorgesehen, dass in Abhängigkeit von dem Zeitpunkt des Aussendens des die Kommunikationsdaten enthaltenen ersten Funksignals mittels des ersten Funkkommunikationssystems der Zeitpunkt des Aussendens des das mindestens eine Pilotsymbol enthaltenen zweiten Funksignals mittels des zweiten Funkkommunikationssystems bestimmt wird. Das zweite Funksignal wird dann zudem zuvor bestimmten Zeitpunkt entsprechend ausgesendet.

Erfindungsgemäß kann dies in 3 verschiedenen Varianten erfolgen. Zum einen können die erste Sendeeinheit und die zweite Sendeinheit so miteinander verbunden sein, dass das Aussenden des zweiten Funksignals durch die erste Sendeeinheit synchronisiert wird. Des Weiteren kann vorgesehen sein, dass die zweite Sendeeinheit das Aussenden des ersten Funksignals durch die erste Sendeeinheit detektiert und dann den Sendezeitpunkt für das zweite Funksignal bestimmt. In einer dritten Variante ist vorgesehen, dass die erste Sendeeinheit und die zweite Sendeinheit unabhängig voneinander zeitlich synchronisiert sind, indem die zweite Sendeeinheit die festen Sendezeitpunkt der der ersten Sendeeinheit kennt.

Gemäß der ersten Variante ist vorgesehen, dass die erste Sendeeinheit und die zweite Sendeeinheit zum synchronisierten aussenden des ersten Funksignals und des zweiten Funksignals über einer drahtgebundenen oder drahtlosen Verbindung miteinander synchronisiert werden. Hierbei ist es denkbar, dass die erste Sendeeinheit über die Synchronisationsverbindung zwischen den beiden Sendeeinheiten ein Triggersignal an die zweite Sendeinheit aussendet, wobei in Abhängigkeit von dem Triggersignal dann das Aussenden des zweiten Funksignals mit dem Pilotsymbol zur Kanalschätzung gesteuert wird. Insbesondere der Zeitpunkt des Aussendens des zweiten Funksignals wird dabei anhand des empfangenen Triggersignals bestimmt.

Gemäß einer zweiten Variante vorgesehen, dass die von der ersten Sendeeinheit ausgesendeten ersten Funksignale durch ein Empfangsmodul der zweiten Sendeeinheit empfangen werden, wobei in Abhängigkeit von einem oder mehreren Eigenschaften des durch das Empfangsmodul empfangenen ersten Funksignals der Zeitpunkt des Aussendens des das mindestens eine Pilotsymbol enthaltenen zweiten Funksignals bestimmt wird. In dieser Ausführungsform lauscht die zweite Sendeeinheit für das zweite Funkkommunikationssystem dem ersten Funkkommunikationssystem und hat insbesondere Wissen über den Funkstandard, sodass die zweite Sendeeinheit den Sendezeitpunkt des zweiten Funksignals mit den Pilotsymbolen zur Kanalschätzung entsprechend bestimmen kann. In dieser Ausführungsform ist eine direkte Verbindung zwischen der ersten Sendeeinheit und der zweiten Sendeeinheit nicht erforderlich und eignet sich insbesondere für eine "ad hoc" Erweiterung.

Gemäß der dritten Variante verwendet die zweite Sendeeinheit die zweiten Funksignale zu einem vom Empfangssystem bekannten Zeitpunkt und/oder zu einem bekannten Sendezeitpunkt des ersten Funksignals, sodass das Aussenden der ersten und zweiten Funksignale ohne Verbindung zwischen der ersten und zweiten Sendeeinheit zeitlich aufgrund festgelegter Zeitpläne synchronisiert ist. Demzufolge ist es vorteilhaft, wenn Abhängigkeit von der Kenntnis des Zeitpunktes des Aussendens des die Kommunikationsdaten enthaltenen ersten Funksignals der Zeitpunkt des Aussendens des das mindestens eine Pilotsymbol enthaltenen zweiten Funksignals bestimmt wird.

Wie bereits erwähnt, ist es vorteilhaft, wenn das erste Funkkommunikationssystem ein AIS-Funkkommunikationssystem ist, mit dem Schiffsdaten bzw. Schiffsverkehrsdaten als Kommunikationsdaten ausgesendet und empfangen werden können. Des Weiteren ist es hierbei vorteilhaft, wenn das zweite Funkkommunikationssystem ein VDE-Kommunikationssystem (VHF Data Exchange) ist, mit dem ergänzend zur Kanalschätzung die Pilotsymbole neben dem AIS ausgesendet werden.

Das Verwenden des zukünftigen maritimen Funkstandards VDE im UKW Frequenzbereich bietet die Möglichkeit, zusätzliche Pilotsymbole für das AIS-Funkkommunikationssystem zu übertragen. Hierbei zeigt die Analyse, dass in der maritimen Umgebung die Kohärenzbandbreite des Übertragungskanals des AIS-Funkstandards sich auf ca. 10 MHz beläuft. Daher ermöglichen die Kanalabstände zwischen VDE und AIS im Bereich von 100 kHz bis 225 kHz eine Umsetzung des erfindungsgemäßen Verfahrens. Hierdurch kann auf der Empfängerseite die Dekodierleistung eines AIS-Empfängers mit einer zusätzlichen Kanalschätzung mittels des VDE-Funkkommunikationssystems verbessert bzw. erhöht werden.

Gemäß einer weiteren Ausführungsform ist vorgesehen, dass die mindestens eine zweite Übertragungsfrequenz, auf der das zweite Funksignal enthaltend das mindestens eine Pilotsymbol übertragen werden soll, in Abhängigkeit von der mindestens einen ersten Übertragungsfrequenz, auf der das erste Funksignal enthaltend die Kommunikationsdaten übertragen werden soll oder wurde, und dessen Kohärenzbandbreite ausgewählt wird.

Gemäß einer weiteren Ausführungsform ist vorgesehen, dass während des Übertragens der Kommunikationsdaten mittels des ersten Funksignals eine Mehrzahl von Pilotsymbolen mittels des zweiten Funksignals übertragen werden. Während die Kommunikationsdaten mittels des ersten Funksignals übertragen werden, werden periodisch wiederkehrend die Pilotsymbole mittels des zweiten Funksignals ausgesendet, sodass eine hohe Genauigkeit bei der Kanalschätzung mittels der Pilotsymbole erzielt werden kann.

So dauert beim AIS-Kommunikationsstandard ein Zeitschlitz genau 26 ms, in dem 256 Bit übertragen werden können. Dabei ist es vorteilhaft, wenn während der Übertragung eines Zeitschlitzes eine Mehrzahl von Pilotsymbolen mittels des zweiten Funkkommunikationssystems zur Kanalschätzung übertragen werden. Das Übertragen des ersten Funksignals entspricht dabei einem Zeitschlitz. Denkbar ist aber auch, dass während einer gesamten Zeitschlitzperiode, in der in 1 Minute 2250 Zeitschlitzsignale übertragen werden, eine Mehrzahl von Pilotsymbolen mittels des zweiten Funkkommunikationssystems zur Kanalschätzung übertragen werden, wobei in diesem Fall die gesamte Zeitschlitzperiode dem ersten Funksignal entspricht. Hierdurch kann die Dekodierfähigkeit auf der Empfängerseite im AIS-Kommunikationsstandard deutlich verbessert werden.

Die Aufgabe wird im Übrigen auch mit dem Kommunikationssystem gemäß Anspruch 11 zur funkbasierten Übertragung von Kommunikationsdaten erfindungsgemäß gelöst, wobei das Kommunikationssystem zur Durchführung des Verfahrens wie vorstehend beschrieben ausgebildet ist. Das Kommunikationssystem weist insbesondere eine erste und eine zweite Sendeinheit auf sowie eine erste und eine zweite Empfangseinheit, um erste und zweite Funksignale mittels des ersten und zweiten Funckommunikationssystems senden und empfangen zu können. Das Kommunikationssystem weist des Weiteren eine Auswerteeinheit auf, die beispielsweise Bestandteil der ersten Empfangseinheit sein kann, um basierend auf den ausgesendeten Pilotsymbolen mit den zweiten Funksignalen eine Kanalschätzung des Übertragungskanals für die ersten Funksignale durchführen zu können.

Die Erfindung wird anhand der beigefügten Figuren beispielhaft näher erläutert. Es zeigen:
- Figur 1: schematische Darstellung des erfindungsgemäßen Kommunikationssystems;
- Figur 2: schematische Darstellung einer ersten Ausführungsform;
- Figur 3: schematische Darstellung einer zweiten Ausführungsform.

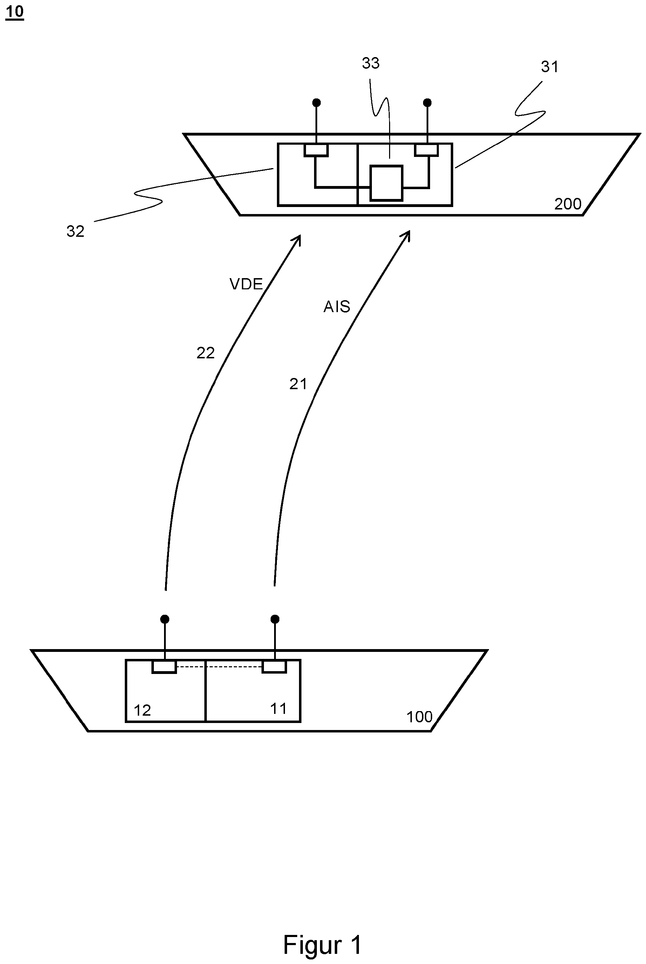

Figur 1 zeigt schematisch das erfindungsgemäße Kommunikationssystem 10 im maritimen Einsatz, bei dem zwischen einem ersten Schiff 100 und einem zweiten Schiff 200 Schiffsverkehrsdaten mittels AIS ausgetauscht werden sollen. Das erste Schiff 100 sendet dabei seine Schiffsverkehrsdaten via AIS aus, während das zweite Schiff 200 diese ausgesendeten Schiffsverkehrsdaten mittels eines AIS-Empfängers empfängt. Die Erfindung ist jedoch grundsätzlich nicht auf den Einsatz eines AIS-Funckommunikationssystems beschränkt.

Das erste Schiff 100 weist eine erste Sendeeinheit 11 und eine zweite Sendeinheit 12 auf, die ein gemeinsames Gerät sein können. Die erste Sendeeinheit 11 kann dabei ein Transceiver zum Senden und Empfangen von AIS-Funksignalen sein. In den weiteren Ausführungen wird jedoch zum Verständnis der Erfindung lediglich von einer Sendeeinheit gesprochen.

Gemäß Figur 1 ist die erste Sendeeinheit 11 des ersten Schiffes 100 so ausgebildet, dass sie auf einer ersten Übertragungsfrequenz des AIS-Funkkommunikationsstandards entsprechende Schiffsverkehrsdaten als Kommunikationsdaten mittels eines ersten Funksignals 21 aussenden kann. Die zweite Sendeinheit 12 des ersten Schiffes 100 ist dabei so ausgebildet, das zweite Funksignale 22 auf einer zweiten Übertragungsfrequenz ausgesendet werden können, wobei die zweiten Funksignale 22 entsprechende Pilotsymbole zur Kanalschätzung des Übertragungskanals des ersten Funksignals 21 enthalten.

Während es sich bei den ersten Funksignalen 21 um AIS-Funksignale handelt, handelt es sich bei den zweiten Funksignalen 22 um VDE-Funksignale des maritimen UKW-Funks. Die ersten Funksignale 21 und die zweiten Funksignale 22 werden dabei auf jeweils verschiedenen Übertragungsfrequenzen übertragen, da die ersten Funksignale 21 unter Verwendung des AIS-Funkkommunikationssystems übertragen werden, während die zweiten Funksignale 22 unter Verwendung des VDE-Funkkommunikationssystems übertragen werden. Dem AIS-Funkkommunikationssystem sind dabei andere Übertragungsfrequenzen zugeordnet, als dem VDE-Funkkommunikationssystem.

Die von der ersten Sendeeinheit 11 ausgesendeten ersten Funksignale 21 und die von der zweiten Sendeeinheit 12 ausgesendeten zweiten Funksignale 22 werden dann von einer ersten Empfangseinheit 31 sowie einer zweiten Empfangseinheit 32 des zweiten Schiffes 200 empfangen. Die erste Empfangseinheit 31 ist dabei so ausgebildet, dass sie die ersten Funksignale 21 auf der entsprechenden Übertragungsfrequenz empfängt, während die zweite Empfangseinheit 32 die zweiten Funksignale 22 auf der entsprechenden Übertragungsfrequenz empfängt.

Die zweiten Funksignale 22 werden dabei durch die zweite Sendeinheit 12 innerhalb der Kohärenzbandbreite der Übertragungsfrequenz der ersten Funksignale 21 ausgesendet, innerhalb derer die Kanalausbreitungseigenschaften korreliert sind. Durch eine Kanalschätzung der zweiten Funksignale 22 kann dabei auf eine entsprechende Kanalschätzung der ersten Funksignale 21 geschlossen werden.

Die von der ersten Empfangseinheit 31 empfangenen ersten Funksignale 21 sowie die von der zweiten Empfangseinheit 32 empfangenen zweiten Funksignale 22 werden dann an eine Auswerteeinheit 33 übermittelt, um basierend auf den empfangenen ersten Funksignalen 21 und insbesondere zweiten Funksignalen 22 eine entsprechende Kanalschätzung des Übertragungskanals der ersten Funksignale 21 durchzuführen. Basierend auf der durchgeführten Kanalschätzung des Übertragungskanals der ersten Funksignale 21 kann dann die Dekodierleistung beim Dekodieren der ersten Funksignale 21 zum Zwecke der Extraktion der Kommunikationsdaten bzw. AIS-Schiffsverkehrsdaten verbessert werden, ohne dass dem AIS-Kommunikationsstandard die Funktionalität einer Kanalschätzung hinzugefügt wird.

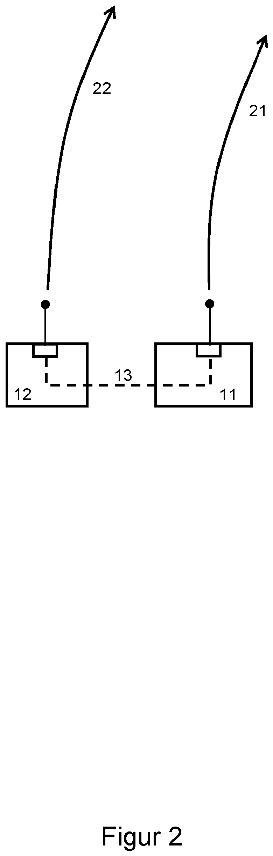

Figur 2 zeigt schematisch stark vereinfacht die erste Sendeeinheit 11 und die zweite Sendeinheit 12, die über eine direkte, drahtgebundenen Verbindung 13 miteinander synchronisiert sind. Hierdurch kann das Aussenden der zweiten Funksignale 22 anhand des Aussendens der ersten Funksignale 21 durch die Synchronisationsleitung 13 direkt gesteuert werden.

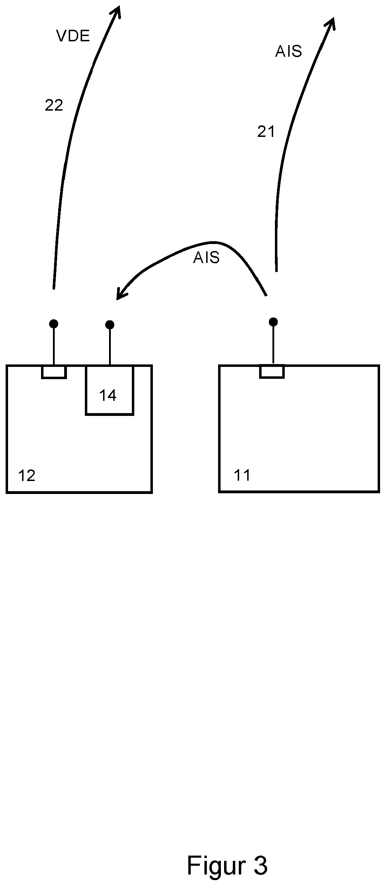

Figur 3 zeigt schematisch stark vereinfacht die erste Sendeeinheit 11 und die zweite Sendeinheit 12, wobei die zweite Sendeinheit 12 ein zusätzliches Empfangsmodul 14 hat, um das Aussenden der ersten Funksignale 21 durch die erste Sendeeinheit 11 mithilfe des Empfangsmoduls 14 der zweiten Sendeeinheit 12 detektieren zu können. Die zweite Sendeinheit 12 erkennt somit den Zeitpunkt des Aussendens der ersten Funksignale 21 und kann damit in Abhängigkeit von diesem Zeitpunkt den Zeitpunkt bestimmen, zudem das Aussenden der zweiten Funksignale 22 zum Zwecke der Kanalschätzung notwendig ist.

### Bezugszeichenliste

- 10: Kommunikationssystem
- 11: erste Sendeeinheit
- 12: zweite Sendeinheit
- 13: Synchronisationsverbindung
- 14: Empfangsmodul
- 21: erstes Funksignal
- 22: zweites Funksignal
- 31: erste Empfangseinheit
- 32: zweite Empfangseinheit
- 33: Auswerteeinheit

## Patentansprüche

1. Verfahren zur funkbasierten Übertragung von Kommunikationsdaten mittels eines ersten Funkkommunikationssystems, mit
- Übertragen der Kommunikationsdaten mittels des ersten Funkkommunikationssystems von mindestens einer ersten Sendeeinheit (11) zu mindestens einer ersten Empfangseinheit (31),
- wobei dem ersten Funkkommunikationssystem ein oder mehrere erste Übertragungsfrequenzen zugeordnet sind, um ein die Kommunikationsdaten enthaltenes erstes Funksignal (21) unter Verwendung des ersten Funckommunikationssystems auf mindestens einer dieser ersten Übertragungsfrequenzen von der ersten Sendeeinheit (11) aussenden und von der ersten Empfangseinheit (31) empfangen zu können,
**gekennzeichnet durch**
- Übertragen mindestens eines Pilotsymbols mittels eines von dem ersten Funkkommunikationssystem verschiedenen zweiten Funkkommunikationssystems von einer zweiten Sendeeinheit (12) zu mindestens einer zweiten Empfangseinheit (32),
- wobei dem zweiten Funkkommunikationssystem ein oder mehrere zweite Übertragungsfrequenzen zugeordnet sind, die von den ersten Übertragungsfrequenzen des ersten Kommunikationssystems verschieden sind, um ein das mindestens eine Pilotsymbol enthaltenes zweites Funksignal (22) unter Verwendung des zweiten Funkkommunikationssystems auf mindestens einer dieser zweiten Übertragungsfrequenzen von der zweiten Sendeeinheit (12) aussenden und von der zweiten Empfangseinheit (32) empfangen zu können,
- wobei das Pilotsymbol in einem zweiten Funksignal (22) auf mindestens einer der zweiten Übertragungsfrequenzen durch die zweite Sendeinheit (12) ausgesendet wird, die sich innerhalb der Kohärenzbandbreite der ersten Übertragungsfrequenz, mit der die Kommunikationsdaten mittels des ersten Funkkommunikationssystems übertragen wurden, befindet, und
- Durchführen einer Kanalschätzung des Übertragungskanals des ersten Funkkommunikationssystems, mit dem die Kommunikationsdaten übertragen wurden, in Abhängigkeit von dem empfangenen zweiten Funksignal (22) enthaltend das mindestens eine Pilotsymbol mittels einer Auswerteeinheit.

2. Verfahren nach Anspruch 1, **dadurch gekennzeichnet, dass** die Kanalschätzung des Übertragungskanals des ersten Funkkommunikationssystems, mit dem die Kommunikationsdaten übertragen wurden, in Abhängigkeit von dem empfangenen ersten Funksignal (21) enthaltend die Kommunikationsdaten und dem empfangenen zweiten Funksignal (22) enthaltend das mindestens eine Pilotsymbol mittels der Auswerteeinheit durchgeführt wird.

3. Verfahren nach Anspruch 1 oder 2, **dadurch gekennzeichnet, dass** in den ersten Funksignalen (21) die Kommunikationsdaten basierend auf einem bekannten ersten Übertragungsprotokoll des ersten Funkkommunikationssystems und in den zweiten Funksignalen (22) das mindestens eine Pilotsymbol basierend auf einem bekannten zweiten Übertragungsprotokoll des zweiten Funckommunikationssystems kodiert werden, wobei das erste Übertragungsprotokoll von dem zweiten Übertragungsprotokoll verschieden ist.

4. Verfahren nach einem der vorhergehenden Ansprüche, **dadurch gekennzeichnet, dass** in Abhängigkeit von dem Zeitpunkt des Aussendens des die Kommunikationsdaten enthaltenen ersten Funksignals (21) der Zeitpunkt des Aussendens des das mindestens eine Pilotsymbol enthaltenen zweiten Funksignals (22) bestimmt wird.

5. Verfahren nach einem der vorhergehenden Ansprüche, **dadurch gekennzeichnet, dass** die von der ersten Sendeeinheit (11) ausgesendeten ersten Funksignale (21) durch ein Empfangsmodul (14) der zweiten Sendeeinheit (12) empfangen werden, wobei in Abhängigkeit von einem oder mehreren Eigenschaften des durch das Empfangsmodul (14) empfangenen ersten Funksignals (21) der Zeitpunkt des Aussendens des das mindestens eine Pilotsymbol enthaltenen zweiten Funksignals (22) bestimmt wird.

6. Verfahren nach einem der vorhergehenden Ansprüche, **dadurch gekennzeichnet, dass** die erste Sendeeinheit (11) und die zweite Sendeeinheit (12) zum synchronisierten Aussenden des ersten Funksignals (21) und des zweiten Funksignals (22) über einer drahtgebundenen oder drahtlosen Verbindung miteinander synchronisiert werden.

7. Verfahren nach einem der vorhergehenden Ansprüche, **dadurch gekennzeichnet, dass** das erste Funkkommunikationssystem ein AIS-Funkkommunikationssystem ist und/oder das zweite Funkkommunikationssystem ein VDE-Funkkommunikationssystem (VHF Data Exchange) ist.

8. Verfahren nach einem der vorhergehenden Ansprüche, **dadurch gekennzeichnet, dass** das erste Funksignal (21) zum Extrahieren der enthaltenen Kommunikationsdaten in Abhängigkeit von der Kanalschätzung des Übertragungskanal des ersten Funksignals (21) mittels eines Dekodiermoduls dekodiert wird.

9. Verfahren nach einem der vorhergehenden Ansprüche, **dadurch gekennzeichnet, dass** die mindestens eine zweite Übertragungsfrequenz, auf der das zweite Funksignal (22) enthaltend das mindestens eine Pilotsymbol übertragen werden soll, in Abhängigkeit von der mindestens einen ersten Übertragungsfrequenz, auf der das erste Funksignal (21) enthaltend die Kommunikationsdaten übertragen werden soll oder wurde, und dessen Kohärenzbandbreite ausgewählt wird.

10. Verfahren nach einem der vorhergehenden Ansprüche, **dadurch gekennzeichnet, dass** während des Übertragens der Kommunikationsdaten mittels des ersten Funksignals eine Mehrzahl von Pilotsymbolen mittels des zweiten Funksignals übertragen werden.

11. Kommunikationssystem (10) zur funkbasierten Übertragung von Kommunikationsdaten, wobei das Kommunikationssystem (10) zur Durchführung des Verfahrens nach einem der Ansprüche 1 bis 9 eingerichtet ist.

## Claims

1. Method for radio-based transmission of communication data by means of a first radio communication system, comprising
- transmitting the communication data from at least one first transmitting unit (11) to at least one first receiving unit (31) by means of the first radio communication system,
- wherein the first radio communication system is allocated one or more first transmission frequencies in order to allow the first transmitting unit (11) to transmit, and to allow the first receiving unit (31) to receive, a first radio signal (21), containing the communication data, on at least one of these first transmission frequencies using the first radio communication system,
**characterized by**
- transmitting at least one pilot symbol from a second transmitting unit (12) to at least one second receiving unit (32) by means of a second radio communication system, which is different from the first radio communication system,
- wherein the second radio communication system is allocated one or more second transmission frequencies, which are different from the first transmission frequencies of the first communication system, in order to allow the second transmitting unit (12) to transmit, and to allow the second receiving unit (32) to receive, a second radio signal (22), containing the at least one pilot symbol, on at least one of these second transmission frequencies using the second radio communication system,
- wherein the pilot symbol is transmitted by the second transmitting unit (12) in a second radio signal (22) on at least one of the second transmission frequencies, which is situated within the coherence bandwidth of the first transmission frequency that was used to transmit the communication data by means of the first radio communication system, and
- performing a channel estimation of the transmission channel of the first radio communication system that was used to transmit the communication data on the basis of the received second radio signal (22) containing the at least one pilot symbol by means of an evaluation unit.

2. Method according to Claim 1, **characterized in that** the channel estimation of the transmission channel of the first radio communication system that was used to transmit the communication data is performed by means of the evaluation unit on the basis of the received first radio signal (21) containing the communication data and the received second radio signal (22) containing the at least one pilot symbol.

3. Method according to Claim 1 or 2, **characterized in that** the communication data are encoded in the first radio signals (21) on the basis of a known first transmission protocol of the first radio communication system and the at least one pilot symbol is encoded in the second radio signals (22) on the basis of a known second transmission protocol of the second radio communication system, the first transmission protocol being different from the second transmission protocol.

4. Method according to one of the preceding claims, **characterized in that** the time of transmission of the first radio signal (21) containing the communication data is taken as a basis for determining the time of transmission of the second radio signal (22) containing the at least one pilot symbol.

5. Method according to one of the preceding claims, **characterized in that** the first radio signals (21) transmitted by the first transmitting unit (11) are received by a receiving module (14) of the second transmitting unit (12), one or more properties of the first radio signal (21) received by the receiving module (14) being taken as a basis for determining the time of transmission of the second radio signal (22) containing the at least one pilot symbol.

6. Method according to one of the preceding claims, **characterized in that** the first transmitting unit (11) and the second transmitting unit (12) are synchronized with one another for the purpose of synchronized transmission of the first radio signal (21) and the second radio signal (22) via a wired or wireless connection.

7. Method according to one of the preceding claims, **characterized in that** the first radio communication system is an AIS radio communication system and/or the second radio communication system is a VDE radio communication system (VHF Data Exchange).

8. Method according to one of the preceding claims, **characterized in that** the first radio signal (21) is decoded by means of a decoding module on the basis of the channel estimation of the transmission channel of the first radio signal (21) for the purpose of extracting the contained communication data.

9. Method according to one of the preceding claims, **characterized in that** the at least one second transmission frequency on which the second radio signal (22) containing the at least one pilot symbol is supposed to be transmitted is selected on the basis of the at least one first transmission frequency on which the first radio signal (21) containing the communication data is supposed to be or was transmitted and the coherence bandwidth of said signal.

10. Method according to one of the preceding claims, **characterized in that** a plurality of pilot symbols are transmitted by means of the second radio signal during the transmission of the communication data by means of the first radio signal.

11. Communication system (10) for radio-based transmission of communication data, wherein the communication system (10) is configured to perform the method according to one of Claims 1 to 9.

## Revendications

1. Procédé de transmission par radio de données de communication au moyen d'un premier système de radiocommunication, comprenant
- la transmission des données de communication d'au moins une première unité d'émission (11) à au moins une première unité de réception (31) au moyen du premier système de radiocommunication,
- une ou plusieurs premières fréquences de transmission étant associées au premier système de radiocommunication, afin de pouvoir émettre un premier signal radio (21), contenant les données de communication, par la première unité d'émission (11) et le recevoir par la première unité de réception (31) sur au moins l'une de ces premières fréquences de transmission en utilisant le premier système de radiocommunication, **caractérisé par**
- la transmission d'au moins un symbole pilote d'une deuxième unité d'émission (12) à au moins une deuxième unité de réception (32) au moyen d'un deuxième système de radiocommunication, différent du premier système de radiocommunication,
- une ou plusieurs deuxièmes fréquences de transmission différentes des premières fréquences de transmission du premier système de communication étant associées au deuxième système de radiocommunication, afin de pouvoir émettre un deuxième signal radio (22), contenant ledit au moins un symbole pilote, par la deuxième unité d'émission (12) et le recevoir par la deuxième unité de réception (32) sur au moins une de ces deuxièmes fréquences de transmission en utilisant le deuxième système de radiocommunication,
- le symbole pilote dans un deuxième signal radio (22) étant émis par la deuxième unité d'émission (12) sur au moins l'une des deuxièmes fréquences de transmission qui se trouve dans la largeur de bande de cohérence de la première fréquence de transmission avec laquelle les données de communication ont été transmises au moyen du premier système de radiocommunication, et
- la mise en oeuvre, au moyen d'une unité d'évaluation, d'une estimation du canal de transmission du premier système de radiocommunication avec lequel les données de communication ont été transmises, en fonction du deuxième signal radio (22) reçu contenant ledit au moins un symbole pilote.

2. Procédé selon la revendication 1,
**caractérisé en ce que** l'estimation du canal de transmission du premier système de radiocommunication avec lequel les données de communication ont été transmises est effectuée au moyen de l'unité d'évaluation en fonction du premier signal radio reçu (21) contenant les données de communication et en fonction du deuxième signal radio reçu (22) contenant ledit au moins un symbole pilote.

3. Procédé selon la revendication 1 ou 2,
**caractérisé en ce que** dans les premiers signaux radio (21), les données de communication sont codées sur la base d'un premier protocole de transmission connu du premier système de radiocommunication, et dans les deuxièmes signaux radio (22), ledit au moins un symbole pilote est codé sur la base d'un deuxième protocole de transmission connu du deuxième système de radiocommunication, le premier protocole de transmission étant différent du deuxième protocole de transmission.

4. Procédé selon l'une des revendications précédentes,
**caractérisé en ce que** l'instant d'émission du deuxième signal radio (22) contenant ledit au moins un symbole pilote est déterminé en fonction de l'instant d'émission du premier signal radio (21) contenant les données de communication.

5. Procédé selon l'une des revendications précédentes,
**caractérisé en ce que** les premiers signaux radio (21) émis par la première unité d'émission (11) sont reçus par un module de réception (14) de la deuxième unité d'émission (12), l'instant d'émission du deuxième signal radio (22) contenant ledit au moins un symbole pilote étant déterminé en fonction d'une ou plusieurs caractéristiques du premier signal radio (21) reçu par le module de réception (14).

6. Procédé selon l'une des revendications précédentes,
**caractérisé en ce que** la première unité d'émission (11) et la deuxième unité d'émission (12) sont synchronisées entre elles via une liaison filaire ou sans fil pour l'émission synchronisée du premier signal radio (21) et du deuxième signal radio (22).

7. Procédé selon l'une des revendications précédentes,
**caractérisé en ce que** le premier système de radiocommunication est un système de radiocommunication AIS, et/ou le deuxième système de radiocommunication est un système de radiocommunication VDE (VHF Data Exchange).

8. Procédé selon l'une des revendications précédentes,
**caractérisé en ce que** le premier signal radio (21) est décodé au moyen d'un module de décodage pour extraire les données de communication contenues, en fonction de l'estimation du canal de transmission du premier signal radio (21).

9. Procédé selon l'une des revendications précédentes,
**caractérisé en ce que** ladite au moins une deuxième fréquence de transmission à laquelle le deuxième signal radio (22) contenant ledit au moins un symbole pilote doit être transmis est choisie en fonction de ladite au moins une première fréquence de transmission à laquelle le premier signal radio (21) contenant les données de communication doit être ou a été transmis, et en fonction de sa largeur de bande de cohérence.

10. Procédé selon l'une des revendications précédentes,
**caractérisé en ce que**, pendant la transmission des données de communication au moyen du premier signal radio, une pluralité de symboles pilotes sont transmis au moyen du deuxième signal radio.

11. Système de communication (10) pour la transmission par radio de données de communication, le système de communication (10) étant conçu pour mettre en oeuvre le procédé selon l'une des revendications 1 à 9.
